# EUROPEAN PATENT SPECIFICATION

(11) **EP 4 143 759 B1**
(45) Date of publication and mention of the grant of the patent: **09.09.2026**
(21) Application number: 21723701.5
(22) Date of filing: 30.04.2021
(51) Int. Cl.: G06Q 10/06

(54) **A SYSTEM AND METHOD FOR AUTOMATIC TASK MANAGEMENT AND ALLOCATION IN AN AIRPORT**
SYSTEM UND VERFAHREN ZUR AUTOMATISCHEN AUFGABENVERWALTUNG UND -ZUWEISUNG IN EINEM FLUGHAFEN
SYSTÈME ET PROCÉDÉ DE GESTION ET D'ATTRIBUTION AUTOMATIQUES DE TÂCHES DANS UN AÉROPORT

(30) Priority: 30.04.2020 US 202063017817 P
(43) Date of publication of application: 08.03.2023
(73) Proprietor: SITA Information Networking Computing UK Limited, Hayes, Middlesex UB3 1BW (GB)
(72) Inventor: MALINOFSKY, Andrew Eric, Atlanta, GA 30339 (US); O'SULLIVAN, Kevin, Aldershot Hampshire GU11 1PZ (GB)
(74) Representative: Reddie & Grose LLP
(86) International application number: PCT/EP2021/061484
(87) International publication number: WO 2021/219890

(56) References cited:
- US-A1- 2014 278 638

## Description

The present application relates to a system for automatic task management and allocation in an airport. In particular, the application relates to a system and method for automatically sending task alerts to relevant staff members and monitoring and clearing these task alerts when the task is determined to be completed.

In airport environments, it is known for staff, such as cleaning staff, to be given a list of locations to work in at certain times of the day. As airport environments can typically be very large, this list may schedule staff to work in the locations that are anticipated as having the highest demand during that time period in order to prioritise areas that will be most used over areas that may be less used, or not used at all, during a given time frame.

For example, security / immigration staff may be scheduled to work at a certain terminal / certain area of a terminal of the airport based on the expected passenger throughput for the respective areas. Similarly, cleaning staff may be scheduled to clean certain areas of the terminals / concourses with a given regularity based on the expected passenger throughput, or may be scheduled to clean certain gate areas based on the scheduled use of those gates by the departing flights that day. US 2014/278638 A1 discloses one such prior art system.

The inventors have appreciated that these schedules are not able to take into account the many factors that may alter the schedule of flights on the day of departure or arrival and that this may lead to wasted resources if staff are sent to areas that are either not used or have a lower usage due to flight delays and gate / terminal reassignments, and under resourcing at areas that experience a corresponding increase in usage. Therefore, the inventors have appreciated that it would be desirable to provide an improved system for automatic task management and allocation in an airport that can take into account these day of departure / arrival variations.

### SUMMARY OF THE INVENTION

The invention is defined in the independent claims to which reference should now be directed. Advantageous features are set out in the dependent claims.

In a first aspect, the present disclosure relates to a system for automatic task management and allocation in an airport. The system comprises a receiving module configured to receive event data, wherein the event data comprises staff data, and wherein the staff data further comprises staff location data of a plurality of staff members; a storage module configured to store airport mapping data; and a processor configured to update a current state of the airport based on the received event data, wherein the current state of the airport comprises a service level, and wherein the processor is configured to compare the service level to a threshold range. The system further comprises a resource allocation module configured to send a task alert to one or more of the plurality of staff members if the service level is determined to be outside of the threshold range; wherein the resource allocation module is configured to clear the task alert if the service level is subsequently determined to be within the threshold range.

Advantageously, the first aspect of the present disclosure is able to automatically determine the nature of a required task, allocate the task to a staff member and then monitor for the completion of that task based on various data streams received from disparate sources, including sensor data. This improves over known task scheduling as the allocation of tasks is able to adapt to the real time events occurring in the airport rather than relying on an out of date information schedule that may lead to some areas being cleaned unnecessarily with other areas not being cleaned when required, for example because the area has been used as the result of an unscheduled change.

The event data also comprises flight data and the processor is configured to update the current state of the airport based on the received flight data. This advantageously enables the method to adapt to changes in the airport environment due to unexpected changes in flight patterns / schedules.

The service level is a cleanliness level of a given area of the airport and the one or more of the plurality of staff members are cleaning staff members. The given area of the airport is a gate area having a boundary defined by a polygon in the airport mapping data, wherein the processor is configured to determine a cleaning event when the staff location data of a cleaning staff member is determined to be within a gate area polygon, wherein the cleanliness level is based on the time since the last cleaning event for that gate area, and wherein the threshold range is a time range from zero to a maximum time limit. This advantageously enables the system to automatically detect the last time that the gate area was cleaned and whether further cleaning is now required based on the cleanliness thresholds that have been set for the gate areas.

The processor is configured to determine a cleaning event only when the staff location data of a cleaning staff member is determined to be within a gate area polygon for longer than a minimum time duration. This advantageously reduces the likelihood of a false positive detection of a cleaning event and therefore improves the reliability and accuracy of the system.

Optionally, the flight data further comprises flight departure events and the cleanliness level is configured to be determined and compared to the threshold range in response to the receipt of a flight departure event at the receiving module. This advantageously provides a trigger for the system to determine the cleanliness level of the gate area and thus reduces the processing overhead required for this monitoring process.

Optionally, the resource allocation module is configured to send an escalated task alert to a further staff member if a cleaning event is not determined for the gate area within a given time duration of the task alert being sent. This advantageously enables a different cleaning staff member to be alerted to the outstanding task if the first cleaning staff member does not respond to the task alert by moving to the location of the gate area, or alternatively the further staff member may be a supervisor who can then deal with the outstanding task and situation appropriately.

Optionally, the processor is configured to determine a walking distance to the gate area polygon from the most recently received staff location data for each of the cleaning staff members, and the resource allocation module is configured to send the task alert to the cleaning staff member determined to have the shortest walking distance to the gate area polygon. This advantageously enables the system to identify the nearest cleaning staff member that may be appropriate for the relevant cleaning task.

Optionally, other event data may comprise a number of passengers determined to be in a given area of the airport, wherein the corresponding service level and/or threshold range is dependent upon the number of passengers determined to be in the given area, and wherein the task alert requests the staff member to attend the given area of the airport. This advantageously enables the system to respond to increases in passenger numbers in a given area by calling additional staff members to that area of the airport so that they can help to deal with the increased passenger demand. Optionally, these given areas of the airport may be any one or more of a departing passenger security screening area, an arriving passenger immigration area, a health screening area, a terminal area or a concourse area. This provides the ability to call further immigration staff, security or other passenger screening staff, cleaning staff, or other handling staff to the respective areas of the airport.

Optionally, the event data may comprise a number of trolleys and/or wheelchairs determined to be in the given area of the airport, wherein the corresponding service level is based upon the number of trolleys and/or wheelchairs respectively in the given area of the airport, and wherein the task alert requests the member of staff to relocate the respective trolleys and/or wheelchairs. This advantageously enables to the distribution of trolleys and/or wheelchairs to be automatically monitored in the airport with staff being assigned the task of redistributing these trolleys and/or wheelchairs in the event that they are determined to be unbalanced, for example with respect to the current total number of passengers in a plurality of different areas.

According to a second aspect, the present disclosure relates to a method for automatic task management and allocation in an airport. The method comprises receiving, at a receiving module, event data, wherein the event data comprises staff data, and wherein the staff data further comprises staff location data of a plurality of staff members; storing, at a storage module, airport mapping data; updating, at a processor, a current state of the airport based on the received event data, wherein the current state of the airport comprises a service level; and comparing, at the processor, the service level to a threshold range. The method further comprises sending, from a resource allocation module, a task alert to one or more of the plurality of staff members if the service level is determined to be outside of the threshold range; and clearing, at the resource allocation module, the task alert if the service level is subsequently determined to be within the threshold range.

Advantageously, the second aspect of the present disclosure is able to automatically determine the nature of a required task, allocate the task to a staff member and then monitor for the completion of that task based on data streams received from disparate sources including sensor data. This improves over known task scheduling as the allocation of tasks is able to adapt to the real time events occurring in the airport rather than relying on an out of date information schedule that may lead to some areas being cleaned unnecessarily with other areas not being cleaned when required, for example because the area has been used as the result of an unscheduled change.

The event data also comprises flight data and the processor is configured to update the current state of the airport based on the received flight data. This advantageously enables the method to adapt to changes in the airport environment due to unexpected changes in flight patterns / schedules.

The service level is a cleanliness level of a given area of the airport and the one or more of the plurality of staff members are cleaning staff members. The given area of the airport is a gate area having a boundary defined by a polygon in the airport mapping data, wherein the method further comprises determining, at the processor, a cleaning event when the staff location data of a cleaning staff member is determined to be within a gate area polygon, wherein the cleanliness level is based on the time since the last cleaning event for that gate area, and wherein the threshold range is a time range from zero to a maximum time limit. This advantageously enables the method to automatically detect the last time that the gate area was cleaned and whether further cleaning is now required based on the cleanliness thresholds that have been set for the gate areas.

The method may further comprise determining, at the processor, a cleaning event only when the staff location data of a cleaning staff member is determined to be within a gate area polygon for longer than a minimum time duration. This advantageously reduces the likelihood of a false positive detection of a cleaning event and therefore improves the reliability and accuracy of the system.

Optionally, the flight data further comprises flight departure events and the cleanliness level is determined and compared to the threshold range in response to the receipt of a flight departure event at the receiving module. This advantageously provides a trigger for the system to determine the cleanliness level of the gate area and thus reduces the processing overhead required for this monitoring process.

Optionally, the method may further comprise sending, from the resource allocation module, an escalated task alert to a further staff member if a cleaning event is not determined for the gate area within a given time duration of the task alert being sent. This advantageously enables a different cleaning staff member to be alerted to the outstanding task if the first cleaning staff member does not respond to the task alert by moving to the location of the gate area, or alternatively the further staff member may be a supervisor who can then deal with the outstanding task and the cleaning staff member appropriately.

Optionally, the method may further comprise determining, at the processor, a walking distance to the gate area polygon from the most recently received staff location data for each of the cleaning staff members, and sending, from the resource allocation module, the task alert to the cleaning staff member determined to have the shortest walking distance to the gate area polygon. This advantageously enables the system to identify the nearest cleaning staff member that may be appropriate for the relevant cleaning task.

Optionally, the event data may further comprise a number of passengers determined to be in a given area of the airport, wherein the service level and/or threshold range is dependent upon the number of passengers determined to be in the given area, and wherein the task alert requests the staff member to attend the given area of the airport. This advantageously enables the system to respond to increases in passenger numbers in a given area by calling additional staff members to that area of the airport so that they can help to deal with the increased passenger demand. Optionally, these given areas of the airport may be any one or more of a departing passenger security screening area, an arriving passenger immigration area, a health screening area, a terminal area or a concourse area. This provides the ability to call further immigration staff, security or other passenger screening staff, cleaning staff, or other handling staff to the respective areas of the airport.

Optionally, the event data may further comprise a number of trolleys and/or wheelchairs determined to be in the given area of the airport, wherein the service level is based upon the number of trolleys and/or wheelchairs respectively in the given area of the airport, and wherein the task alert requests the member of staff to relocate the respective trolleys and/or wheelchairs. This advantageously enables to the distribution of trolleys and/or wheelchairs to be automatically monitored in the airport with staff being assigned the task of redistributing these trolleys and/or wheelchairs in the event that they are determined to be unbalanced, for example with respect to the current total number of passengers in a plurality of different areas.

### BRIEF DESCRIPTION OF THE DRAWINGS

Embodiments of the invention will now be described, by way of example only, and with reference to the accompanying drawings, in which:
Figure 1 is a schematic representation of a system according to a first aspect of the disclosure for carrying out a method according to a second aspect of the disclosure;
Figure 2 is a flowchart illustrating a method according to an embodiment of the second aspect of the disclosure; and
Figure 3 is a flowchart illustrating optional further steps in the method of Figure 2.

### DETAILED DESCRIPTION

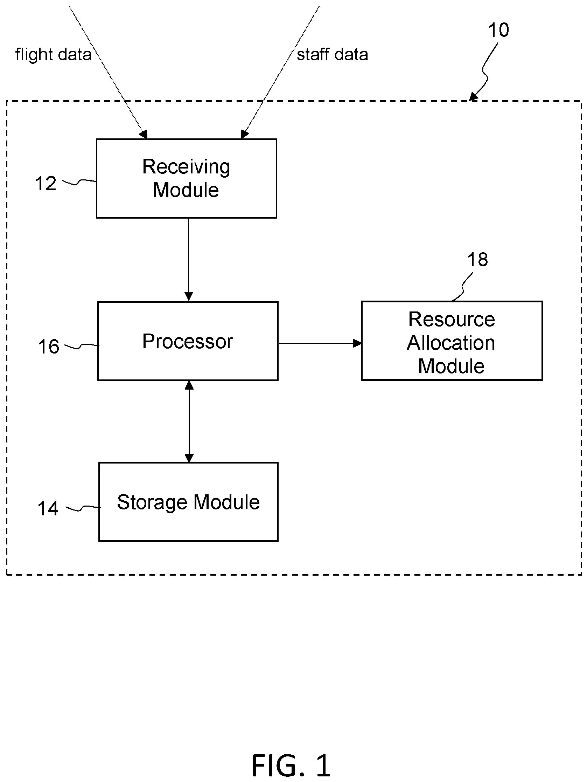

Figure 1 is a schematic representation of a system 10 according to a first aspect of the disclosure. The system 10 comprises a receiving module 12, a storage module 14, a processor 16, and a resource allocation module 18.

The receiving module 12 is configured to receive a stream of event data from a plurality of sources. These sources can include staff data, flight data, and other data relating to the infrastructure of an airport.

The staff data may relate to a unique identifier corresponding to the staff member as well as their most recently known location. It may be appreciated that while in some embodiments the staff member may be a human, further embodiments are envisaged where the staff member may be an animal (such as a sniffer dog) or a drone / robot (such as an autonomous and movable check in kiosk or baggage transportation device). The time of this most recently known location could also be included in the staff data, otherwise the relevant time would be assumed to be the time of receipt of the staff data by the system 10. Further information elements could also be included in the received staff data, such as the nature of the staff member's role (e.g. cleaning or security) and the current task(s) assigned to them; alternatively, these information elements could be obtained from a linked relational database based on the staff member's unique identifier.

The most recently known location for the staff member is input into the system 10 as a data stream. The source of this location data stream may obtain this location data from any known location tracking method and the embodiments of the present disclosure are not limited to any individual methodology. One example location tracking method is the use of smartphone technology, such as GPS tracking/forwarding, wireless beacon tracking (for example using Bluetooth technology), or Wi-Fi triangulation. Another method for obtaining location information may be to use camera vision technologies.

The flight data may include a unique flight identifier and a scheduled, estimated or actual time of arrival / departure. Further information elements could also be included in the flight data, such as the airport gate assigned to the flight, the flight number and aircraft tail number, the aircraft model, the number of passengers and crew expected on board, and a status of the flight; alternatively, these information elements could be obtained from a linked relational database based on the unique flight identifier.

This stream of events may be received from these various sources by the receiving module 12 asynchronously, for example by using an Application Programming Interface (API). The events are then communicated to the processor 16 of the system 10 for further handling. The processor 16 collects these events together to build up and update a current state of the airport. This state of the airport can be used to determine various metrics about the current operating environment of the airport, for example a service level may be determined based on the monitoring of staff presence in given areas of the airport; the context required to determine the service level for the various areas of the airport can be obtained based on mapping data for the airport stored in the storage module 14 in combination with criteria directed to the service level in question.

The processor 16 may then compare this service level to one or more thresholds set for the service level. Based on this comparison, where the service level is determined to be outside of a threshold range, for example below a given standard, the resource allocation module 18 may determine that additional resource is needed in the given area in the form of increased staff member activity, in this case the resource allocation module 18 may send a task alert to one or more staff members asking them to redeploy to the given area to improve the service level in that area.

The system 10 can continue to monitor the service level in that area and to cancel, clear, or mark complete any outstanding task alerts if the service level is subsequently determined to be within the threshold service level range. This monitoring is either triggered by or based upon flight data such as the updated estimated or actual flight arrival or departure events, which may be expected to deviate from the scheduled flight arrival and departure times by some amount due to poor weather and the combination of other general delays. These delays may not only change the time of arrival or departure, but may also impact the allocation of airport gate areas and/or airport terminals to that flight or one of the subsequent flights at the airport. In this manner, the system 10 receives a continuous real time stream of events from disparate sources and combines these otherwise siloed data sources to create an optimised task management and allocation / assignment system for managing airport staff members.

By receiving a large and varied amount of real time data, the system 10 has a more complete awareness of events at the airport and can understand how near term future events may unfold and recommend changes to the task allocations in a way that humans would not be able to.

In one example the service level is a cleanliness level relating to how clean a given area of the airport may be considered to be. This cleanliness level may be determined by the system 10 based on the number of cleaning staff members in that area of the airport or the last time that a cleaning staff member was in that area of the airport. As such, the system 10 may receive staff data including location data connected to cleaning staff members and this data may be stored in a time-series / geo-tagged database.

For defined smaller areas, such as the gate areas where passengers congregate and wait to board an aircraft, it may be desirable to base the cleanliness on the last time that a cleaning staff member was in that gate area. As such, the airport mapping data stored in the storage module 14 may define polygons / bounding boxes corresponding to the boundaries of each of the gate areas along with an identifier, such as the gate name. By comparing the location information received over time for the cleaning staff members with these gate area polygons, the most recent time that a given gate area was visited by a cleaning staff member can be determined. This can be assumed to be a cleaning event where the cleaning staff member cleans the gate area that they have arrived at and a timestamp corresponding to the visit can be stored as a separate data element in a store of the system 10, such as the storage module 14.

In some examples, a minimum time duration may be set such that a cleaning event is only determined if the cleaning staff member has been determined to be within the polygon corresponding to the gate area for the minimum time duration. This reduces the detection of false positive cleaning events where the cleaning staff member only passed next to the polygon (with erroneous location events briefly showing the cleaning member as being located within the polygon) or where the cleaning staff member briefly visited the area (for example to ascertain the level and type of cleaning required) without actually undertaking a cleaning of the area.

The cleanliness level can be determined and compared to the relevant threshold periodically, or in response to a certain trigger event. Within the context of the cleaning of a gate area, a suitable event might be something to indicate that a flight has recently departed from the gate area in question. In this case, the relevant flight data might be the receipt of an event such as an aircraft OFF OOOI event ACARS (Aircraft Communications Addressing and Reporting System) message, an update to a DCS (Departure Control System) or another known record of a flight pushback / take-off event. This is because it is typical in airport operations for cleaning staff member(s) to be scheduled to clean a gate area after a flight has taken off from that gate and before the gate is in use again for the next flight in order to ensure that the gate area is presentable for each departing flight.

Accordingly, the system 10 monitors for the receipt of events relating to the departure of a flight and performs a determination of the cleanliness level of the corresponding gate area in response to the receipt of such an event. The processor 16 may extract the relevant gate area either from the data of the flight departure event, or by correlating the identifier of the flight to another list that contains entries of the up-to-date gate assignments for each of the flights departing from the airport in question. The cleanliness level is then considered by determining (or looking up from the store) the timestamp of the most recent visit to that gate area (meeting any minimum visit duration requirements) by a cleaning staff member.

If the time since the most recent visit exceeds a specified duration, then it is determined that the cleanliness service level is not within the desired threshold range and an alert is raised and sent to a cleaning staff member with a cleaning task for that specific gate area. Otherwise, it can be determined that the gate area has been recently cleaned to a satisfactory level - the length of time that the cleaning staff member was in that gate area polygon may be taken into consideration in this determination.

Identifying the appropriate cleaning staff member to send the task alert to is also not straightforward. Optionally the identification of the appropriate cleaning staff member may be based on the proximity of the available cleaning staff members to the location associated with the cleaning task, in this case the airport gate location. In order to do this, the processor 16 of the system 10 may analyse the airport mapping data stored in the data store 14 in combination with the location of the gate area polygon and the most recent location of the plurality of active cleaning staff members. By using airport mapping data, the system 10 can determine a distance and/or time for the staff member to walk or travel to the gate area taking into account the layout and possible navigation routes in the airport environment. The mapping of this route could be performed using many known systems and accordingly will not be discussed further herein. Alternatively, a simple and direct distance/time "as the crow flies" could be determined between the gate area and the locations of the respective cleaning staff members.

Optionally, the identification of the appropriate cleaning staff member may also consider one or more of: the working hours of each staff member (for example a staff member may not be selected if they are about to finish their working shift), the tasks currently assigned to the respective staff members (for example the number of tasks and the locations associated with those tasks, which might take the staff member further away from the gate area location than their most recently known location), or the respective priority of any tasks currently assigned to the respective staff members.

For such example arrangements, the staff data may include a list of the current task(s) assigned to each staff member and may further include the location and priority level associated with each task. As noted above, the staff member may be a robot / drone that is able to perform cleaning operations, such as the application of UV-C light or sprays for sterilisation, or fumigation.

Through further monitoring of the service level at the gate area, it may be determined by the processor 16 whether a cleaning staff member has entered the gate area polygon subsequent to the task alert being generated and sent to the identified one or more staff members. If there is a new detection of a cleaning staff member entering the gate area polygon then it may be assumed that a cleaning event has occurred - this may then take the cleanliness service level to be within the threshold range. As such, the resource allocation module 18 may then clear the corresponding task alert that had been sent to the one or more staff members. As discussed above, the determination of a cleaning event may require the received location staff data to indicate that the cleaning staff member has been in the area for a minimum duration of time in order to prevent false detection of cleaning events.

If a given time duration has elapsed since the task alert for the given gate area was sent by the resource allocation module 18 without a cleaning event being determined for the given gate area / the cleanliness service level has not been determined to be within the desired threshold range, then the resource allocation module 18 may be configured to send an escalated task alert to a further staff member. This may be a higher priority task alert sent to another cleaning staff member, or alternatively it may be sent to a cleaning supervisor so that relevant action can be taken by the supervisor. The skilled person will appreciate that this given time duration is user customisable and may be set to any appropriate duration depending on the specific circumstances and implementation.

The above example implementation of the system 10 enables cleaning staff to target parts of the airport campus / environment that are in active use and to not unnecessarily clean or check areas, such as gate areas, that have not been used as expected (due to day of departure / arrival delays and gate reassignments) and will remain unused for certain periods of the day. This improves the effectiveness and utilisation of the airport cleaning staff resources and provides a higher service level for passengers and staff alike. This is particularly beneficial for large airports where the impact of the reduction in cleaning staff efficiency due to day of departure / arrival delays and changes would be very expensive and it would also be very complicated to account for this using prior art airport task management methods, which ultimately results in inadequate cleaning.

In a further example implementation of the system 10, the given area of the airport may be an area other than a gate area. In such an implementation, the cleanliness of that area may not be directly linked to the arrival / departure of a single flight. As such, it has been appreciated that cleanliness service level may be based on the number of passengers in the given area of the airport, in particular it may be based on a ratio of the number of passengers determined to be in the given area to either the number of cleaning staff members operating in that area or the number of workhours carried out by cleaning staff members over a given period. The skilled person will appreciate that further ratios could also be defined for this service level metric. These given areas of the airport would include the various terminal areas and concourse areas, including associated areas such as toilets / restrooms, and subdivisions thereof.

The number of passengers in the respective areas could be received as event data for the airport that has been identified using any one of many known techniques, such as image/video based passenger detection and counting, mobile device polling using wireless transmissions, or by using flight data to estimate the passenger numbers based on the number of passengers expected on scheduled departing or arriving flights.

However, the inventors have appreciated that this task management and allocation system 10 can also be implemented for other airport staff, such as security staff operating at the security screening area that separates the landside and airside boarders/boundaries of the airport, and immigration / passport control officials operating at the arriving passenger immigration / passport control area of the airport.

If the system 10 detects that the number of passengers in the security screening area or passport control area results in a respective passenger to security staff / passport control official ratio that is outside of a desired threshold range then a task alert may be sent to further security staff or passport control officials to mobilise them to the area in question. For example, these staff may have been previously deployed at a different security screening area or passport control area such as in a different terminal of the airport. It will be appreciated that this processing could also be implemented in relation to other airport staff, such as passenger health screening staff. In this manner, the system can detect high levels of service demand in a given area of the airport and send task alerts to further staff members to provide additional service in those areas in order to keep the overall service level within an acceptable threshold range.

It will be appreciated that this task management and allocation could also be carried out on the basis of prediction of the number of passengers that will be in a given area of the airport at a given point in time. For example, a known or assumed number of passengers on an arriving flight may be used, in combination with the estimated time or arrival for that flight to build and update a picture of the total number of passengers that will be arriving at a given passport control area, which serves a particular airport terminal or range of gates in an airport terminal, during a certain time window. This can then be fed into the task management and allocation system 10 to pre-emptively assign additional staff to a particular passport control area in order to manage future arriving passenger demand at that area. Corresponding steps could also be performed for flights departing in a given time window from a certain terminal with respect to the expected number of passengers passing through associated security screening areas at the airside boarder in the airport, or associated health screening areas.

Furthermore, the inventors have appreciated that this task management and allocation system 10 can also be implemented for baggage handling staff where the service level relates to baggage tracking information, for example identifying the number of bags in a given area at any one point in time, and the staff data is in relation to baggage handling staff. This baggage tracking input may be obtained from any known source, such as a camera vision system, or location information from tags added to each item of baggage using beacons, RFID, or other geo location means.

A stream of such baggage tracking information may be input into the system 10 and processed at the processor 16 to determine the through flow of baggage. This may include intelligence such that the processor 16 can determine anomalies such as baggage congestion / clustering where this would not normally be expected and that takes the baggage related service level for one or more areas of the airport outside of the desired threshold range. This may for example be due to broken down conveyor belts that should be transiting the baggage, baggage jams, or other issues causing baggage congestion. This could also be displayed visually as a heat map for users of the system to indicate the density of baggage at various points in the baggage system, colour coded for expected threshold density levels.

If the baggage related service level for one or more areas of the airport is determined by the processor 16 to be outside of the desired threshold range, then the resource allocation module 18 will send a task alert to one or more of the baggage handling staff to investigate the issue and take any required remedial action.

In this manner, the system can detect unexpected levels of baggage congestion in the state of a given area of the airport and send task alerts to baggage handling staff members to investigate the situation and take remedial action before the congestion problems grow so as to return the corresponding service level to be within the desired threshold range.

Furthermore, the service level may also relate to the available number of a particular physical asset, such as a baggage trolley or passenger wheelchair, in certain areas of the airport. For example, if a flight is diverted to depart from or arrive at one area of the airport to another then this may lead to an imbalance in the distribution of baggage trolleys or passenger wheelchairs in those areas. In these circumstances, a task alert may be sent to a staff member for a certain quantity of the baggage trolleys or wheelchairs to be redistributed from one area of the airport to another.

Optionally, this airport state and the associated event stream can be output to an engine for generating and simulating the location and behaviour of physical assets in the airport environment in a digital representation of the airport in what is sometimes described as a digital twin of the airport. In this sense, the physical assets may include the airport staff members. This simulation can be displayed as a layer on a 3D model showing a live view of the live data stream or the data streams can be used to view historical representations of the state of the airport environment.

Periodic snapshots (e.g. every 5 minutes) of the current state of the airport can be recorded so that these can be used as starting points when a user desires to view historical data. To navigate to a particular point in the past, the digital twin simulation would start from the most recent snapshot prior to the time of interest, and then it would process the stream of events received subsequent to the time of the snapshot and up until the time of interest is reached.

Such a digital twin simulation can provide a full picture of the current state of the airport, including where various staff members are, which flights are arriving and departing, which stands and gates are allocated to those flights and which arriving passengers and bags need to be processed for connecting flights etc. This full picture can be used to track key performance indicators and to optimise airport operations and performance by shifting away from schedule driven management to a system that manages staff and available resources in the airport in real time and in response to incoming events that may impact the demand for those staff and available resources.

For example, when a flight arrives earlier or later than it was scheduled to, the digital twin can recommend changes to the allocated airport stands, airport gate areas and associated aircraft turnaround staff members in real time by sending updated task alerts to these staff members. The aircraft turnaround process represents a very time sensitive and complicated sequence of events that is usually initiated by the expected or actual arrival of the aircraft. For this sequence of events to proceed efficiently, the relevant staff members would preferably be ready and waiting at the airport stand where the aircraft is going to park for when the aircraft arrives. These staff members would be there ready with the appropriate equipment to quickly get passengers, cargo and baggage off of the aircraft, to transport offloaded baggage to the appropriate baggage carousel, to refuel the aircraft, to clean the aircraft, to replenish the food and potable water on the aircraft, and to onboard the new passengers, baggage and cargo.

These changes can be configured to factor in data streams including which turnaround staff are available and in proximity to the stand / airport gate, what the knock-on effects on connecting passengers and baggage are of changing the stand allocations for flights associated with those passengers and bags and how this might then impact the queues for the passport control / immigration areas if the aircraft stand / gate combination is closer to or further away from the passport control area, etc.

In a specific example implementation, the stream of events may be asynchronously received at the receiving module 12 from the various sources using a notification service over a WebSocket streaming interface API. Different aspects can be implemented as microservices, which means that each service can be built around a specific capability and deployed independently, and each service may even use different data storage technologies and different programming languages if appropriate.

Each event may be considered to be a point in time state change for the airport environment. These events may have a consistent structure, for example for an event providing an update of the estimated time of departure for a flight, the event structure may be:

```
        {
        "event_type": "flight_estimated_departure",
        "estimated": "2020-03-27T16:43:00+0000",
        "timestamp": "2020-03-27T14:58:00+0000",
        "flight_id": "31f5b375-9598-4beb-8af4-1adc902658bc"
       }
```

The "event type" data tag identifies the type of event that is being received, the "estimated" data tag provides the updated estimated flight departure time, the "timestamp" data tag provides a time associated with the estimation of the flight departure time, and the "flight_id" data tag identifies the flight to which the update of the estimated time of departure relates.

Similarly, an event providing an actual departure time for a flight may take the form:

```
        {
        "event_type": "flight_departed",
        "timestamp": "2020-03-27T15:19:00+0000",
        "flight_id": "49dd2775-6e2a-4023-bb4b-782dd9f65f8b"
       }
```

Similarly, an event providing a change in the airport gate associated with a flight may take the form:

```
        {
        "event_type": "flight_gate_update",
        "gate": "A20",
        "timestamp": "2020-03-27T16:44:54-0400",
        "flight_id": "6c64c025-b972-4534-8d29-eeeed5a1f32d"
       }
```

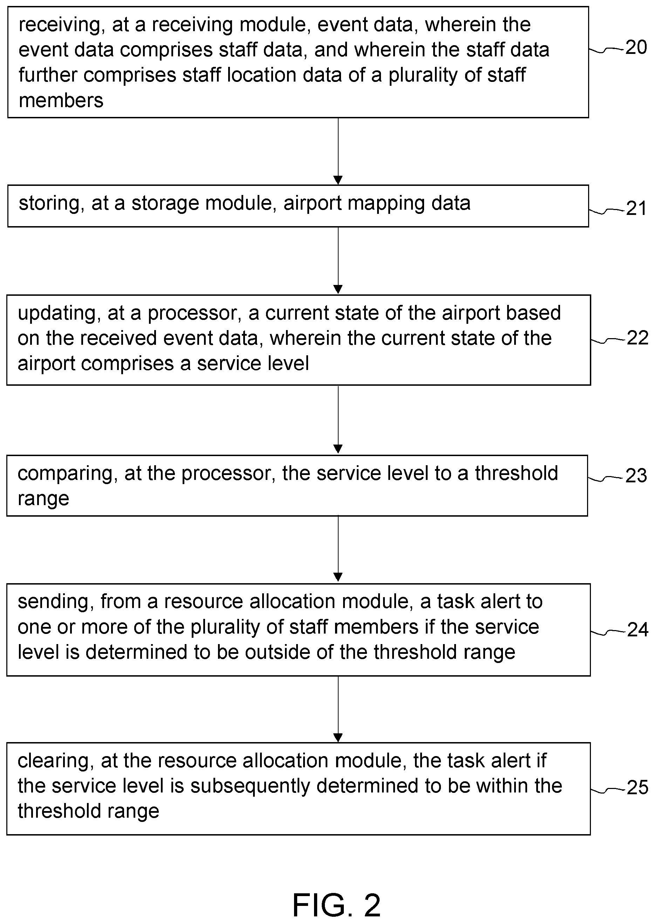

Figure 2 is a flowchart illustrating a method according to an embodiment of the second aspect of the disclosure, which provides for automatic task management and allocation in an airport. At step 20 of the method, event data is received at the receiving module. The event data comprises staff data, and the staff data further comprises staff location data corresponding to a plurality of staff members. At step 21, airport mapping data is stored at the storage module.

Then at step 22, the processor updates the current state of the airport based on the received event data including determining a current service level associated with the current state of the airport. In one example, this service level may be a cleanliness level of a given area of the airport and the one or more of the plurality of staff members may be cleaning staff members.

The given area of the airport may be a gate area having a boundary defined by a polygon in the airport mapping data and, in this respect, the method may further comprise determining, at the processor, a cleaning event when the staff location data of a cleaning staff member is determined to be within a gate area polygon. The cleanliness level may be based on the time since the last cleaning event for that gate area, and a threshold range may be defined as a time range from zero to a maximum time limit.

At step 23, the processor compares the service level to the threshold range to determine if the service level of the gate area meets the desired cleanliness level. If the service level is determined to be outside of the threshold range then the resource allocation module sends a task alert to one or more of the plurality of staff members at step 24. This task alert may request one or more cleaning staff members to move to the gate area in question in order to provide cleaning services and improve the cleanliness service level at that gate area.

If it is subsequently determined that the service level is within the threshold range, then the method may proceed to step 25 wherein the resource allocation module clears the relevant task alert.

This monitoring may be triggered by or based upon flight data such as the updated estimated or actual flight arrival or departure events. In a number of cases, these arrival or departure times may be expected to deviate from the scheduled flight arrival and departure times due to the many delays that can impact flight operations. These delays not only impact the timing of flights, but may also result in unscheduled changes to airport stand and gate allocations for aircraft. By receiving flight data as part of the event data and determining and comparing the cleanliness level to the threshold range in response to the receipt of a flight departure event at the receiving module, the method is able to respond to such changes in the day of departure operations of the airport and thus results in an optimised task management and allocation / assignment system for managing airport staff members.

This method is not only applicable to cleaning staff members and also not only applicable to airport gate areas, indeed it can also be used in a corresponding manner to the many scenarios described above with respect to the system 10 of the first aspect of the present disclosure.

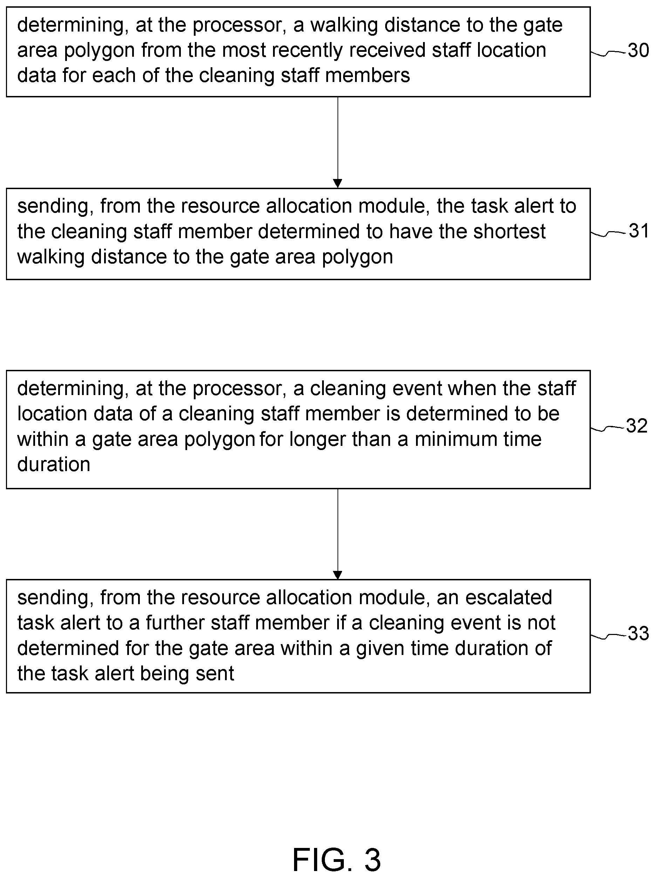

Figure 3 shows two flowcharts illustrating a number of further optional steps that may be performed during the method according to a further embodiment of the second aspect of the disclosure. At step 30 of the method, the processor 16 determines a walking distance to the gate area polygon from the most recently received staff location data for each of the cleaning staff members. Once these respective distances have been obtained, the processor 16 may optionally cause the resource allocation module 18 to send the task alert to the cleaning staff member determined to have the shortest walking distance to the gate area polygon at step 31.

In a further optional step, as set out at step 32 of Figure 3, the processor 16 may only determine a cleaning event when the staff location data of a cleaning staff member is determined to be within a gate area polygon for longer than a minimum time duration. In this manner, the method may advantageously reduce the likelihood of a false positive detection of a cleaning event. While monitoring for this cleaning event, if a cleaning event is not determined for the gate area within a given time duration of the task alert being sent then the resource allocation module 18 may send an escalated task alert to a further staff member at step 33. This further staff member may be another cleaning staff member with the escalated task being a higher priority task alert, or alternatively they may be a cleaning supervisor with the escalated task action requesting the supervisor to take relevant action.

For completeness it is noted that the flowcharts of Figures 2 and 3 illustrate the operation of an example implementation of the computerised method and corresponding computer program products according to an embodiment of the present disclosure. Each block in the flowcharts may represent a module comprising one or more executable computer instructions, or a portion of an instruction, for implementing the logical function specified in the block. The order of blocks in the diagram is only intended to be illustrative of an example. In alternative implementations, the logical functions illustrated in particular blocks may occur out of the order noted in the figures. For example, the processed associated with two blocks may be carried out simultaneously or, depending on the functionality, in the reverse order. Each block in the flowchart may be implemented in software, hardware or a combination of software and hardware.

In a further example implementation, the system may be described as being formed of a Janitorial Notification Service and a Notification Service. In this example implementation, a Flight Information Provider may send flight update messages to a Flight Event Service. The Flight Event Service is configured to filter the flight update messages to identify and ingest flight departed events, and these flight departed events are then forwarded to an Event Bus. Simultaneously, location sensors may send staff location update events to a Location Service. The Location Service is configured to filter the staff location update events for janitor / cleaning staff location events, and these janitor staff location events are also forwarded to the Event Bus. The Event Bus may also store all of the received events in a time series order in a Time Series Database. The Flight Event Service may also store a copy of the flight departed events in a Flight Event Database.

The Event Bus then forwards the flight departed events and janitor staff location events to the Janitorial Notification Service. The Janitorial Notification Service may then compare the location of the janitorial staff from the janitor staff location events with the respective locations and boundaries of all of the airport gates obtained from an Airport Infrastructure Service. By this comparison, the Janitorial Notification Service can identify if a member of the janitorial staff enters an airport gate area and then store a record of this in a Last Time at Gate Database. The Janitorial Notification Service may also get the departure gate information corresponding to each of the flights identified in the received flight departure events by polling a Flight Record Service, which may also communicate with the Flight Event Database.

Next, the Janitorial Notification Service determines how long it has been since a janitor was in the area of each airport gate by polling the Last Time at Gate Database and comparing the received times, associated with each airport gate, with the current time. If this time duration exceeds a configurable time duration threshold, then a task is created by the Janitorial Notification Service and passed to the Notification Service for sending to a member of the janitorial staff.

In a further stage, the Janitorial Notification Service may continue to compare the location of the janitorial staff from further janitor staff location events with the respective locations and boundaries of all of the airport gates obtained from the Airport Infrastructure Service. By these continued comparisons, the Janitorial Notification Service can identify whether a member of the janitorial staff enters one of the airport gate areas subsequent to a task being created by the Janitorial Notification Service for that gate area (i.e. when there is an active task for that gate area) and, if a member of the janitorial staff does enter the gate area, then clear or cancel the task activity for that gate area. The tasks (including a history of active and cleared tasks) may also be stored in a Task Tracking Database by the Janitorial Notification Service.

While the above disclosure has been described in relation to airport staff operating in an airport environment, it will be appreciated that the present teaching could also be applied to other environments and associated staff, such as at train stations, bus stations. Ferry terminals or cruise ship terminals.

As will be appreciated by the skilled person, the concept described herein may be embodied in whole or in part as a method, a data processing system, or a computer program product including computer readable instructions. Accordingly, the system 10 may take the form of an entirely hardware embodiment or an embodiment combining software, firmware, hardware and/or any other suitable approach or apparatus.

Any computer readable program instructions may be stored on a non-transitory, tangible computer readable medium. The computer readable storage medium may include one or more of an electronic storage device, a magnetic storage device, an optical storage device, an electromagnetic storage device, a semiconductor storage device, a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk.

## Claims

1. A system (10) for automatic task management and allocation in an airport, comprising:
a receiving module (12) configured to receive event data, wherein the event data comprises staff data, and wherein the staff data further comprises staff location data of a plurality of staff members;
a storage module (14) configured to store airport mapping data;
a processor (16) configured to update a current state of the airport based on the received event data, wherein the current state of the airport comprises a service level, and wherein the processor (16) is configured to compare the service level to a threshold range; and
a resource allocation module (18) configured to send a task alert to one or more of the plurality of staff members if the service level is determined to be outside of the threshold range;
wherein the resource allocation module (18) is configured to clear the task alert if the service level is subsequently determined to be within the threshold range;
wherein the event data further comprises flight data and wherein the processor (16) is configured to update the current state of the airport based on the received flight data.;
wherein the service level is a cleanliness level of a given area of the airport and the one or more of the plurality of staff members are cleaning staff members;
wherein the given area of the airport is a gate area having a boundary defined by a polygon in the airport mapping data, wherein the processor (16) is configured to determine a cleaning event when the staff location data of a cleaning staff member is determined to be within a gate area polygon, wherein the cleanliness level is based on the time since the last cleaning event for that gate area, and wherein the threshold range is a time range from zero to a maximum time limit; and
wherein the processor (16) is configured to determine a cleaning event only when the staff location data of a cleaning staff member is determined to be within a gate area polygon for longer than a minimum time duration.

2. The system (10) of claim 1, wherein the flight data further comprises flight departure events, and wherein the cleanliness level is configured to be determined and compared to the threshold range in response to the receipt of a flight departure event at the receiving module.

3. The system (10) of claim 1 or 2, wherein the resource allocation module (18) is configured to send an escalated task alert to a further staff member if a cleaning event is not determined for the gate area within a given time duration of the task alert being sent.

4. The system (10) of any of claims 1 to 3, wherein the processor (16) is configured to determine a walking distance to the gate area polygon from the most recently received staff location data for each of the cleaning staff members, and the resource allocation module (18) is configured to send the task alert to the cleaning staff member determined to have the shortest walking distance to the gate area polygon.

5. The system (10) of any of claims 1 to 4, wherein the event data further comprises a number of passengers determined to be in a given area of the airport, wherein the service level and/or threshold range is dependent upon the number of passengers determined to be in the given area, and wherein the task alert requests the staff member to attend the given area of the airport.

6. The system (10) of claim 5, wherein the given area of the airport is one of: a departing passenger security screening area, an arriving passenger immigration area, a health screening area, a terminal area or a concourse area.

7. The system (10) of claim 5 or 6, wherein the event data further comprises a number of trolleys and/or wheelchairs determined to be in the given area of the airport, wherein the service level is based upon the number of trolleys and/or wheelchairs respectively in the given area of the airport, and wherein the task alert requests the member of staff to relocate the respective trolleys and/or wheelchairs.

8. A method for automatic task management and allocation in an airport, the method comprising:
receiving (20), at a receiving module, event data, wherein the event data comprises staff data, and wherein the staff data further comprises staff location data of a plurality of staff members;
storing (21), at a storage module, airport mapping data;
updating (22), at a processor, a current state of the airport based on the received event data, wherein the current state of the airport comprises a service level;
comparing (23), at the processor, the service level to a threshold range;
sending (24), from a resource allocation module, a task alert to one or more of the plurality of staff members if the service level is determined to be outside of the threshold range; and
clearing (25), at the resource allocation module, the task alert if the service level is subsequently determined to be within the threshold range;
wherein the event data further comprises flight data and wherein the processor is configured to update the current state of the airport based on the received flight data;
wherein the service level is a cleanliness level of a given area of the airport and the one or more of the plurality of staff members are cleaning staff members;
wherein the given area of the airport is a gate area having a boundary defined by a polygon in the airport mapping data, wherein the method further comprises determining, at the processor, a cleaning event when the staff location data of a cleaning staff member is determined to be within a gate area polygon, wherein the cleanliness level is based on the time since the last cleaning event for that gate area, and wherein the threshold range is a time range from zero to a maximum time limit; and
wherein the method further comprises determining (32), at the processor, a cleaning event only when the staff location data of a cleaning staff member is determined to be within a gate area polygon for longer than a minimum time duration.

9. The method of claim 8, wherein the flight data further comprises flight departure events, and wherein the cleanliness level is determined and compared to the threshold range in response to the receipt of a flight departure event at the receiving module.

10. The method of claim 8 or 9, further comprising sending (33), from the resource allocation module, an escalated task alert to a further staff member if a cleaning event is not determined for the gate area within a given time duration of the task alert being sent.

11. The method of any of claims 8 to 10, further comprising determining (30), at the processor, a walking distance to the gate area polygon from the most recently received staff location data for each of the cleaning staff members, and sending (31), from the resource allocation module, the task alert to the cleaning staff member determined to have the shortest walking distance to the gate area polygon.

12. The method of any of claims 8 to 11, wherein the event data further comprises a number of passengers determined to be in a given area of the airport, wherein the service level and/or threshold range is dependent upon the number of passengers determined to be in the given area, and wherein the task alert requests the staff member to attend the given area of the airport.

13. The method of claim 12, wherein the given area of the airport is one of: a departing passenger security screening area, an arriving passenger immigration area, a health screening area, a terminal area or a concourse area.

14. The method of claim 12 or 13, wherein the event data further comprises a number of trolleys and/or wheelchairs determined to be in the given area of the airport, wherein the service level is based upon the number of trolleys and/or wheelchairs respectively in the given area of the airport, and wherein the task alert requests the member of staff to relocate the respective trolleys and/or wheelchairs.

15. A non-transitory computer readable medium comprising instructions that, when executed by a processor, cause a computer to undertake the method of any of claims 8 to 14.

## Patentansprüche

1. System (10) zur automatischen Aufgabenverwaltung und -zuweisung auf einem Flughafen, umfassend:
ein Empfangsmodul (12), das ausgebildet ist, um Ereignisdaten zu empfangen, wobei die Ereignisdaten Personaldaten umfassen, und wobei die Personaldaten weiter Personalstandortdaten einer Vielzahl von Personalmitgliedern umfassen;
ein Speichermodul (14), das ausgebildet ist, um Flughafenkartierungsdaten zu speichern;
einen Prozessor (16), der ausgebildet ist, um einen aktuellen Zustand des Flughafens auf der Grundlage der empfangenen Ereignisdaten zu aktualisieren, wobei der aktuelle Zustand des Flughafens eine Servicestufe umfasst, und wobei der Prozessor (16) ausgebildet ist, um die Servicestufe mit einem Schwellenbereich zu vergleichen; und
ein Ressourcenzuweisungsmodul (18), das ausgebildet ist, um eine Aufgabenwarnung an einen oder mehrere der Vielzahl von Personalmitgliedern zu senden, wenn bestimmt wird, dass die Servicestufe außerhalb des Schwellenbereichs liegt;
wobei das Ressourcenzuweisungsmodul (18) ausgebildet ist, um die Aufgabenwarnung zu löschen, wenn anschließend bestimmt wird, dass die Servicestufe innerhalb des Schwellenbereichs liegt;
wobei die Ereignisdaten weiter Flugdaten umfassen und wobei der Prozessor (16) ausgebildet ist, um den aktuellen Zustand des Flughafens auf der Grundlage der empfangenen Flugdaten zu aktualisieren;
wobei die Servicestufe eine Sauberkeitsstufe einer gegebenen Fläche des Flughafens ist und das eine oder mehrere der Vielzahl von Personalmitgliedern Reinigungspersonalmitglieder sind;
wobei die gegebene Fläche des Flughafens eine Gate-Fläche ist, die eine durch ein Polygon in den Flughafenkartierungsdaten definierte Grenze aufweist, wobei der Prozessor (16) ausgebildet ist, um ein Reinigungsereignis zu bestimmen, wenn bestimmt wird, dass sich die Personalstandortdaten eines Reinigungspersonalmitglieds innerhalb eines Gate-Flächen-Polygons befinden, wobei die Sauberkeitsstufe auf der Grundlage der Zeit seit dem letzten Reinigungsereignis für diese Gate-Fläche beruht, und wobei der Schwellenbereich ein Zeitbereich von Null bis zu einem maximalen Zeitlimit ist; und
wobei der Prozessor (16) ausgebildet ist, um ein Reinigungsereignis nur dann zu bestimmen, wenn bestimmt wird, dass sich die Personalstandortdaten eines Reinigungspersonalmitglieds länger als eine Mindestzeitdauer innerhalb eines Gate-Flächen-Polygons befinden.

2. System (10) nach Anspruch 1, wobei die Flugdaten weiter Flugabgangsereignisse umfassen, und wobei die Sauberkeitsstufe ausgebildet ist, um als Reaktion auf den Empfang eines Flugabgangsereignisses am Empfangsmodul bestimmt und mit dem Schwellenbereich verglichen zu werden.

3. System (10) nach Anspruch 1 oder 2, wobei das Ressourcenzuweisungsmodul (18) ausgebildet ist, um eine verschärfte Aufgabenwarnung an ein weiteres Personalmitglied zu senden, wenn für die Gate-Fläche innerhalb einer gegebenen Zeitdauer, nachdem die Aufgabenwarnung gesendet worden ist, kein Reinigungsereignis bestimmt wird.

4. System (10) nach einem der Ansprüche 1 bis 3, wobei der Prozessor (16) ausgebildet ist, um einen Gehabstand zum Gate-Flächen-Polygon aus den zuletzt empfangenen Personalstandortdaten für jedes der Reinigungspersonalmitglieder zu bestimmen, und das Ressourcenzuweisungsmodul (18) ausgebildet ist, um die Aufgabenwarnung an das Reinigungspersonalmitglied zu senden, das bestimmt ist, den kürzesten Gehabstand zum Gate-Flächen-Polygon aufzuweisen.

5. System (10) nach einem der Ansprüche 1 bis 4, wobei die Ereignisdaten weiter eine Anzahl an Passagieren umfassen, die bestimmt sind, sich auf einer gegebenen Fläche des Flughafens zu befinden, wobei die Servicestufe und/oder der Schwellenbereich von der Anzahl an Passagieren abhängt, die bestimmt sind, sich auf der gegebenen Fläche zu befinden, und wobei die Aufgabenwarnung das Personalmitglied auffordert, die gegebene Fläche des Flughafens zu besuchen.

6. System (10) nach Anspruch 5, wobei die gegebene Fläche des Flughafens eine ist von: einer Sicherheitsüberprüfungsfläche für abreisende Passagiere, einer Einwanderungsfläche für ankommende Passagiere, einer Gesundheitsüberprüfungsfläche, einer Terminalfläche oder einer Flughafenhallenfläche.

7. System (10) nach Anspruch 5 oder 6, wobei die Ereignisdaten weiter eine Anzahl an Transportwagen und/oder Rollstühlen umfassen, die bestimmt sind, sich auf der gegebenen Fläche des Flughafens zu befinden, wobei die Servicestufe auf der Anzahl an Transportwagen und/oder Rollstühlen jeweils auf der gegebenen Fläche des Flughafens basiert, und wobei die Aufgabenwarnung das Personalmitglied auffordert, die jeweiligen Transportwagen und/oder Rollstühle neu zu positionieren.

8. Verfahren zur automatischen Aufgabenverwaltung und -zuweisung auf einem Flughafen, wobei das Verfahren umfasst:
Empfangen (20) von Ereignisdaten an einem Empfangsmodul, wobei die Ereignisdaten Personaldaten umfassen, und wobei die Personaldaten weiter Personalstandortdaten einer Vielzahl von Personalmitgliedern umfassen;
Speichern (21) von Flughafenkartierungsdaten in einem Speichermodul;
Aktualisieren (22), an einem Prozessor, eines aktuellen Zustands des Flughafens auf der Grundlage der empfangenen Ereignisdaten, wobei der aktuelle Zustands des Flughafens eine Servicestufe umfasst;
Vergleichen (23) der Servicestufe am Prozessor mit einem Schwellenbereich;
Senden (24) einer Aufgabenwarnung von einem Ressourcenzuweisungsmodul an ein oder mehrere der Vielzahl von Personalmitgliedern, wenn bestimmt wird, dass die Servicestufe außerhalb des Schwellenbereichs liegt; und
Löschen (25) der Aufgabenwarnung am Ressourcenzuweisungsmodul, wenn anschließend bestimmt wird, dass sich die Servicestufe innerhalb des Schwellenbereichs befindet;
wobei die Ereignisdaten weiter Flugdaten umfassen und wobei der Prozessor ausgebildet ist, um den aktuellen Zustand des Flughafens auf der Grundlage der empfangenen Flugdaten zu aktualisieren;
wobei die Servicestufe eine Sauberkeitsstufe einer gegebenen Fläche des Flughafens ist und das eine oder mehrere der Vielzahl von Personalmitgliedern Reinigungspersonalmitglieder sind;
wobei die gegebene Fläche des Flughafens eine Gate-Fläche ist, die eine Grenze aufweist, die durch ein Polygon in den Flughafenkartierungsdaten definiert ist, wobei das Verfahren weiter Bestimmen eines Reinigungsereignisses am Prozessor umfasst, wenn die Personalstandortdaten eines Reinigungspersonalmitglieds bestimmt werden, sich innerhalb eines Gate-Flächen-Polygons zu befinden, wobei die Sauberkeitsstufe auf der Grundlage der Zeit seit dem letzten Reinigungsereignis für diese Gate-Fläche erfolgt, und wobei der Schwellenbereich ein Zeitbereich von Null bis zu einem maximalen Zeitlimit ist; und
wobei das Verfahren weiter Bestimmen (32) eines Reinigungsereignisses am Prozessor nur dann umfasst, wenn bestimmt wird, dass sich die Personalstandortdaten eines Reinigungspersonalmitglieds länger als eine Mindestzeitdauer innerhalb eines Gate-Flächen-Polygons befinden.

9. Verfahren nach Anspruch 8, wobei die Flugdaten weiter Flugabgangsereignisse umfassen, und wobei die Sauberkeitsstufe als Reaktion auf den Empfang eines Flugabgangsereignisses am Empfangsmodul bestimmt und mit dem Schwellenbereich verglichen wird.

10. Verfahren nach Anspruch 8 oder 9, weiter umfassend Senden (33) einer verschärften Aufgabenwarnung vom Ressourcenzuweisungsmodul an ein weiteres Personalmitglied, wenn ein Reinigungsereignis für die Gate-Fläche nicht innerhalb einer gegebenen Zeitdauer, nachdem die Aufgabenwarnung gesendet worden ist, bestimmt wird.

11. Verfahren nach einem der Ansprüche 8 bis 10, weiter umfassend Bestimmen (30) am Prozessor eines Gehabstands zum Gate-Flächen-Polygon aus den zuletzt empfangenen Personalstandortdaten für jedes der Reinigungspersonalmitglieder und Senden (31) vom Ressourcenzuweisungsmodul der Aufgabenwarnung an das Reinigungspersonalmitglied, das bestimmt ist, den kürzesten Gehabstand zum Gate-Flächen-Polygon aufzuweisen.

12. Verfahren nach einem der Ansprüche 8 bis 11, wobei die Ereignisdaten weiter eine Anzahl an Passagieren umfassen, die bestimmt sind, sich auf einer gegebenen Fläche des Flughafens zu befinden, wobei die Servicestufe und/oder der Schwellenbereich von der Anzahl an Passagieren abhängt, die bestimmt sind, sich auf der gegebenen Fläche zu befinden, und wobei die Aufgabenwarnung das Personalmitglied auffordert, die gegebene Fläche des Flughafens zu besuchen.

13. Verfahren nach Anspruch 12, wobei die gegebene Fläche des Flughafens eine ist von: einer Sicherheitsüberprüfungsfläche für abreisende Passagiere, einer Einwanderungsfläche für ankommende Passagiere, einer Gesundheitsüberprüfungsfläche, einer Terminalfläche oder einer Flughafenhallenfläche.

14. Verfahren nach Anspruch 12 oder 13, wobei die Ereignisdaten weiter eine Anzahl an Transportwagen und/oder Rollstühlen umfassen, die bestimmt sind, sich auf der gegebenen Fläche des Flughafens zu befinden, wobei die Servicestufe auf der Anzahl an Transportwagen und/oder Rollstühlen jeweils auf der gegebenen Fläche des Flughafens basiert, und wobei die Aufgabenwarnung das Personalmitglied auffordert, die jeweiligen Transportwagen und/oder Rollstühle neu zu positionieren.

15. Nicht-flüchtiges computerlesbares Medium, das Anweisungen umfasst, die, wenn sie von einem Prozessor ausgeführt werden, einen Computer veranlassen, das Verfahren nach einem der Ansprüche 8 bis 14 durchzuführen.

## Revendications

1. Un système (10) de gestion et d'attribution automatique de tâches dans un aéroport,
comprenant :
un module de réception (12) configuré pour recevoir des données d'événement, dans lequel les données d'événement comprennent des données de personnel, et dans lequel les données de personnel comprennent en outre des données de localisation de personnel d'une pluralité de membres du personnel ;
un module de stockage (14) configuré pour stocker des données de cartographie d'aéroport ;
un processeur (16) configuré pour mettre à jour un état actuel de l'aéroport sur la base des données d'événement reçues, dans lequel l'état actuel de l'aéroport comprend un niveau de service, et dans lequel le processeur (16) est configuré pour comparer le niveau de service à une plage seuil ;
et
un module (18) d'attribution de ressources configuré pour envoyer une alerte de tâche à un ou plusieurs parmi la pluralité de membres du personnel si le niveau de service est déterminé comme étant en dehors de la plage seuil ;
dans lequel le module (18) d'attribution de ressources est configuré pour effacer l'alerte de tâche si le niveau de service est ensuite déterminé comme étant dans la plage seuil ;
dans lequel les données d'événement comprennent en outre des données de vol et dans lequel le processeur (16) est configuré pour mettre à jour l'état actuel de l'aéroport sur la base des données de vol reçues. ;
dans lequel le niveau de service est un niveau de propreté d'une zone donnée de l'aéroport et les un ou plusieurs parmi la pluralité de membres du personnel sont des membres du personnel de nettoyage ;
dans lequel la zone donnée de l'aéroport est une zone de porte présentant une limite définie par un polygone dans les données de cartographie d'aéroport,
dans lequel le processeur (16) est configuré pour déterminer un événement de nettoyage lorsque les données de localisation de personnel d'un membre du personnel de nettoyage sont déterminées comme étant à l'intérieur d'un polygone de zone de porte, dans lequel le niveau de propreté est basé sur le temps écoulé depuis le dernier événement de nettoyage pour cette zone de porte, et dans lequel la plage seuil est une plage de temps allant de zéro à une limite de temps maximale ; et
dans lequel le processeur (16) est configuré pour déterminer un événement de nettoyage uniquement lorsque les données de localisation de personnel d'un membre du personnel de nettoyage sont déterminées comme étant à l'intérieur d'un polygone de zone de porte pendant une durée supérieure à une durée minimale.

2. Système (10) selon la revendication 1, dans lequel les données de vol comprennent en outre des événements de départ de vol, et dans lequel le niveau de propreté est configuré pour être déterminé et comparé à la plage seuil en réponse à la réception d'un événement de départ de vol au niveau du module récepteur.

3. Système (10) selon la revendication 1 ou la revendication 2, dans lequel le module (18) d'attribution de ressources est configuré pour envoyer une alerte de tâche intensifiée à un autre membre du personnel si un événement de nettoyage n'est pas déterminé pour la zone de porte dans une durée donnée de l'alerte de tâche étant envoyée.

4. Système (10) selon l'une quelconque des revendications 1 à 3, dans lequel le processeur (16) est configuré pour déterminer une distance de marche jusqu'au polygone de zone de porte à partir des données de localisation de personnel reçues le plus récemment pour chacun des membres du personnel de nettoyage, et le module (18) d'attribution de ressources est configuré pour envoyer l'alerte de tâche au membre du personnel de nettoyage déterminé comme présentant la distance de marche la plus courte jusqu'au polygone de zone de porte.

5. Système (10) selon l'une quelconque des revendications 1 à 4, dans lequel les données d'événement comprennent en outre un nombre de passagers déterminés comme étant dans une zone donnée de l'aéroport, dans lequel le niveau de service et/ou la plage seuil dépend du nombre de passagers déterminés comme étant dans la zone donnée, et dans lequel l'alerte de tâche demande au membre du personnel de s'occuper de la zone donnée de l'aéroport.

6. Système (10) selon la revendication 5, dans lequel la zone donnée de l'aéroport est l'une parmi : une zone de contrôle de sécurité de passagers au départ, une zone d'immigration des passagers à l'arrivée, une zone de contrôle sanitaire, une zone de terminal ou une zone de hall.

7. Système (10) selon la revendication 5 ou la revendication 6, dans lequel les données d'événement comprennent en outre un nombre de chariots et/ou de fauteuils roulants déterminés comme étant dans la zone donnée de l'aéroport, dans lequel le niveau de service est basé sur le nombre de chariots et/ou de fauteuils roulants respectivement dans la zone donnée de l'aéroport, et dans lequel l'alerte de tâche demande au membre du personnel de relocaliser les chariots et/ou fauteuils roulants respectifs.

8. Procédé de gestion et d'attribution automatique de tâches dans un aéroport, le procédé comprenant :
la réception (20), au niveau d'un module de réception, de données d'événement, dans lequel les données d'événement comprennent des données de personnel, et dans lequel les données de personnel comprennent en outre des données de localisation de personnel d'une pluralité de membres du personnel ;
le stockage (21), au niveau d'un module de stockage, de données de cartographie d'aéroport ;
la mise à jour (22), au niveau d'un processeur, d'un état actuel de l'aéroport sur la base des données d'événement reçues, dans lequel l'état actuel de l'aéroport comprend un niveau de service ;
la comparaison (23), au niveau du processeur, du niveau de service à une plage seuil ;
l'envoi (24), à partir d'un module d'allocation de ressources, d'une alerte de tâche à un ou plusieurs parmi la pluralité de membres du personnel si le niveau de service est déterminé comme étant en dehors de la plage seuil ; et
l'effacement (25), au niveau du module d'allocation de ressources, de l'alerte de tâche si le niveau de service est ensuite déterminé comme étant dans la plage seuil ;
dans lequel les données d'événement comprennent en outre des données de vol et dans lequel le processeur est configuré pour mettre à jour l'état actuel de l'aéroport sur la base des données de vol reçues. ;
dans lequel le niveau de service est un niveau de propreté d'une zone donnée de l'aéroport et les un ou plusieurs parmi la pluralité de membres du personnel sont des membres du personnel de nettoyage ;
dans lequel la zone donnée de l'aéroport est une zone de porte présentant une limite définie par un polygone dans les données de cartographie d'aéroport, dans lequel le procédé comprend en outre la détermination, au niveau du processeur, d'un événement de nettoyage lorsque les données de localisation de personnel d'un membre du personnel de nettoyage sont déterminées comme étant à l'intérieur d'un polygone de zone de porte, dans lequel le niveau de propreté est basé sur le temps écoulé depuis le dernier événement de nettoyage pour cette zone de porte, et dans lequel la plage seuil est une plage de temps allant de zéro à une limite de temps maximale ; et
dans lequel le procédé comprend en outre la détermination (32), au niveau du processeur, d'un événement de nettoyage uniquement lorsque les données de localisation de personnel d'un membre du personnel de nettoyage sont déterminées comme étant à l'intérieur d'un polygone de zone de porte pendant une durée supérieure à une durée minimale.

9. Procédé selon la revendication 8, dans lequel les données de vol comprennent en outre des événements de départ de vol, et dans lequel le niveau de propreté est déterminé et comparé à la plage seuil en réponse à la réception d'un événement de départ de vol au niveau du module récepteur.

10. Procédé selon la revendication 8 ou la revendication 9, comprenant en outre l'envoi (33), à partir du module d'allocation de ressources, d'une alerte de tâche intensifiée à un autre membre du personnel si un événement de nettoyage n'est pas déterminé pour la zone de porte dans une durée donnée de l'alerte de tâche étant envoyée.

11. Procédé selon l'une quelconque des revendications 8 à 10, comprenant en outre la détermination (30), au niveau du processeur, d'une distance de marche jusqu'au polygone de zone de porte à partir des données de localisation de personnel reçues le plus récemment pour chacun des membres du personnel de nettoyage, et l'envoi (31), à partir du module d'attribution de ressources, de l'alerte de tâche au membre du personnel de nettoyage déterminé comme présentant la distance de marche la plus courte jusqu'au polygone de zone de porte.

12. Procédé selon l'une quelconque des revendications 8 à 11, dans lequel les données d'événement comprennent en outre un nombre de passagers déterminés comme étant dans une zone donnée de l'aéroport, dans lequel le niveau de service et/ou la plage seuil dépend du nombre de passagers déterminés comme étant dans la zone donnée, et dans lequel l'alerte de tâche demande au membre du personnel de s'occuper de la zone donnée de l'aéroport.

13. Procédé selon la revendication 12, dans lequel la zone donnée de l'aéroport est l'une parmi : une zone de contrôle de sécurité de passagers au départ, une zone d'immigration des passagers à l'arrivée, une zone de contrôle sanitaire, une zone de terminal ou une zone de hall.

14. Procédé selon la revendication 12 ou la revendication 13, dans lequel les données d'événement comprennent en outre un nombre de chariots et/ou de fauteuils roulants déterminés comme étant dans la zone donnée de l'aéroport, dans lequel le niveau de service est basé sur le nombre de chariots et/ou de fauteuils roulants respectivement dans la zone donnée de l'aéroport, et dans lequel l'alerte de tâche demande au membre du personnel de relocaliser les chariots et/ou fauteuils roulants respectifs.

15. Support non transitoire lisible par ordinateur comprenant des instructions qui, lorsqu'elles sont exécutées par un processeur, amènent le processeur à réaliser le procédé selon l'une quelconque des revendications 8 à 14.
